# EUROPEAN PATENT APPLICATION

(11) **EP 4 672 441 A1**
(43) Date of publication of application: **31.12.2025**
(21) Application number: 25175016.2
(22) Date of filing: 08.05.2025
(51) Int. Cl.: H01M 50/117, H01M 50/533, H01M 50/536, H01M 50/627, H01M 50/176, H01M 50/103, H01M 50/119, H01M 50/54

(54) **SECONDARY BATTERY AND METHOD FOR MANUFACTURING SECONDARY BATTERY**

(30) Priority: 28.06.2024 KR 20240085645
(71) Applicant: SAMSUNG SDI CO., LTD., Yongin-si, Gyeonggi-do 17084 (KR)
(72) Inventor: MOON, Eunjeong, 17084 Yongin-si (KR); KIM, Donghyun, 17084 Yongin-si (KR); SEO, Yejin, 17084 Yongin-si (KR); KIM, Sang Gyu, 17084 Yongin-si (KR); JEOUNG, Seokyo, 17084 Yongin-si (KR)
(74) Representative: Marks & Clerk LLP

(57) **Abstract**

A secondary battery includes an electrode assembly configured to include a first electrode, a separator, and a second electrode, the first electrode including a plurality of first substrate tabs extending in a first direction on one surface of the first electrode, and the second electrode including a plurality of second substrate tabs extending in the first direction on one surface of the second electrode; a case configured to have one open surface and to accommodate the electrode assembly; a cover configured to cover the open surface of the case to seal the electrode assembly from an outside; a first strip terminal joined to at least some of the first substrate tabs in a second direction perpendicular to the first direction; and a second strip terminal joined to at least some of the second substrate tabs in the second direction.

## Description

### BACKGROUND

### 1. Field

Aspects of embodiments of the present disclosure relate to a secondary battery and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Generally, the electrode tab of the electrode assembly is connected to the electrode terminal in the case, and the electrode assembly is accommodated in the case. In this manner, the secondary battery may be manufactured. For such a secondary battery, efforts may be made to efficiently utilize the space inside the case and increase the energy density of the secondary battery.

The above information disclosed in this Background section is for enhancement of understanding of the background of the present disclosure, and therefore, it may contain information that does not constitute related (or prior) art.

### SUMMARY

In order to solve the technical problems described above, aspects of embodiments of the present disclosure are directed to a secondary battery and a method for manufacturing the secondary battery.

These and other aspects and features of the present disclosure will be described in or will be apparent from the following description of embodiments of the present disclosure.

According to some embodiments of the present disclosure there is provided a secondary battery including: an electrode assembly configured to include a first electrode, a separator, and a second electrode, the first electrode including a plurality of first substrate tabs extending in a first direction on one surface of the first electrode, and the second electrode including a plurality of second substrate tabs extending in the first direction on one surface of the second electrode; a case configured to have one open surface and to accommodate the electrode assembly; a cover configured to cover the open surface of the case to seal the electrode assembly from an outside; a first strip terminal joined to at least some of the first substrate tabs in a second direction perpendicular to the first direction; and a second strip terminal joined to at least some of the second substrate tabs in the second direction.

In some embodiments, the case includes stainless steel (SUS).

In some embodiments, the electrode assembly includes a first multi-tab formed by welding at least some of the first substrate tabs and a second multi-tab formed by welding at least some of the second substrate tabs.

In some embodiments, the first multi-tab includes first tab welding regions in which at least some of the first substrate tabs are welded, the second multi-tab includes second tab welding regions in which at least some of the second substrate tabs are welded, the first tab welding regions are at opposite ends of the first multi-tab with respect to the second direction, and the second tab welding regions are at opposite ends of the second multi-tab with respect to the second direction.

In some embodiments, the first multi-tab includes a first terminal welding region welded to the first strip terminal, the second multi-tab includes a second terminal welding region welded to the second strip terminal, and the first terminal welding region is in a region of the first multi-tab outside of the first tab welding regions, and the second terminal welding region is in a region of the second multi-tab outside of the second tab welding regions.

In some embodiments, the secondary battery further includes an insulating plate or an insulating tape on a second surface opposite to a first surface of the first multi-tab to which the first strip terminal is welded.

In some embodiments, at least some of the first substrate tabs are joined by ultrasonic welding or laser welding to form the first multi-tab, and at least some of the second substrate tabs are joined by ultrasonic welding or laser welding to form the second multi-tab.

In some embodiments, a maximum thickness of the electrode assembly is 3 mm or less.

In some embodiments, the secondary battery further includes an insulating cover configured to include two holes, the insulating cover is joined to the electrode assembly by inserting each of the first multi-tab and the second multi-tab into the two holes.

In some embodiments, the first multi-tab includes a first bent portion in which the first multi-tab is bent, and the second multi-tab includes a second bent portion in which the second multi-tab is bent.

In some embodiments, the electrode assembly is inserted into the case by bending the first bent portion and the second bent portion.

In some embodiments, the first strip terminal and the second strip terminal are welded to an inner surface of the case.

In some embodiments, one end of the first strip terminal is joined to at least some of the first substrate tabs, and one end of the second strip terminal is joined to at least some of the second substrate tabs.

In some embodiments, the case includes an electrolyte injection port on one surface perpendicular to the open surface.

In some embodiments, the first strip terminal is joined to at least some of the first substrate tabs by ultrasonic welding or laser welding, and the second strip terminal is joined to at least some of the second substrate tabs by ultrasonic welding or laser welding.

According to some embodiments of the present disclosure there is also provided a method for manufacturing a secondary battery, the method including: forming an electrode assembly including a first electrode, a separator, and a second electrode, the first electrode including a plurality of first substrate tabs extending in a first direction on one surface of the first electrode, and the second electrode including a plurality of second substrate tabs extending in the first direction on one surface of the second electrode; joining by welding a first strip terminal to at least some of the first substrate tabs in a second direction perpendicular to the first direction; joining by welding a second strip terminal to at least some of the second substrate tabs in the second direction; joining by welding the first strip terminal and the second strip terminal to an inner surface of a case having one open surface; inserting the electrode assembly into the case by bending the first substrate tabs and the second substrate tabs; and covering the open surface of the case with a cover to seal the electrode assembly from an outside.

In some embodiments, the method further includes: forming a first multi-tab by welding at least some of the first substrate tabs; and forming a second multi-tab by welding at least some of the second substrate tabs.

In some embodiments, the method further includes: cutting at least a portion of one end of the first multi-tab or the second multi-tab.

In some embodiments, the method further includes: joining the electrode assembly to an insulating cover by inserting each of the first multi-tab and the second multi-tab into two holes of the insulating cover.

In some embodiments, one end of the first strip terminal is joined to at least some of the first substrate tabs, and one end of the second strip terminal is joined to at least some of the second substrate tabs.

According to some embodiment of the present disclosure, the strip terminal is joined to the multi-tab while being disposed in the width direction of the electrode assembly, so that the strip terminal may not protrude upward from the multi-tab. Due to this, no additional bent portion other than the first bent portion may be required during the process of inserting the electrode assembly into the case. Therefore, after the electrode assembly is inserted into the case, the space occupied by the multi-tab and the strip terminal in the longitudinal direction of the electrode assembly may be reduced (e.g., minimized). As a result, the energy density of the secondary battery may be improved. Additionally, the time and cost required for the bending process may be saved.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an exploded perspective view of a secondary battery according to some embodiments of the present disclosure.
FIG. 2 illustrates a perspective view of an electrode assembly according to some embodiments of the present disclosure.
FIG. 3A-3B illustrate cross-sectional views taken along the line A-A' of FIG. 2, according to some embodiments of the present disclosure.
FIG. 4 illustrates an electrode assembly in which a first tab welding region is formed, according to some embodiments of the present disclosure.
FIG. 5 illustrates an electrode assembly with which a strip terminal is joined, according to some embodiments of the present disclosure.
FIG. 6 illustrates an electrode assembly in which a first terminal welding region is formed, according to some embodiments of the present disclosure.
FIG. 7 illustrates an electrode assembly in which a second terminal welding region is formed, according to some embodiments of the present disclosure.
FIG. 8 illustrates the welding of a strip terminal to a case according to some embodiments of the present disclosure.
FIG. 9A illustrates an insulating plate according to some embodiments of the present disclosure.
FIG. 9B illustrates an insulating tape according to some embodiments of the present disclosure.
FIGS. 10A-10B illustrate the insertion of an electrode assembly into a case according to some embodiments of the present disclosure.
FIG. 11 illustrates an insulating cover according to some embodiments of the present disclosure.
FIG. 12 illustrates an electrode assembly joined to an insulating cover according to some embodiments of the present disclosure.
FIG. 13 is a flowchart illustrating a method for manufacturing a secondary battery according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present specification, the singular forms as used herein also include the plural forms, unless the context clearly specifies the singular forms. In addition, the plural forms as used herein also include the singular forms, unless the context clearly specifies the plural forms. It will be understood that the terms "comprise," "include," or "have" as used herein specify the presence of stated elements, but do not preclude the presence or addition of one or more other elements.

In the present disclosure, the sizes and relative sizes of layers and regions shown in the drawings may be exaggerated for clarity of explanation. That is, the sizes shown in the drawings are only for convenience of understanding and are not limited thereto. In addition, the same reference numerals denote the same elements throughout the specification.

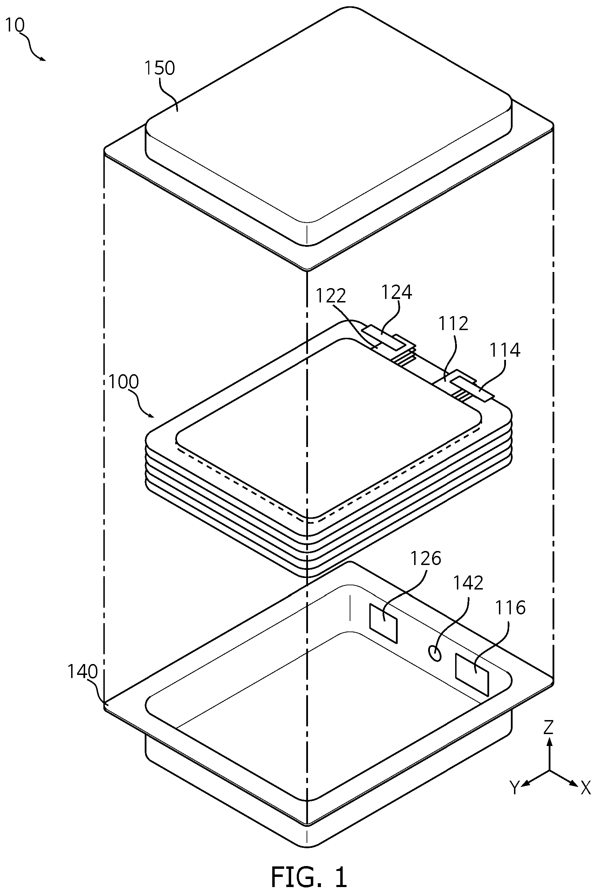

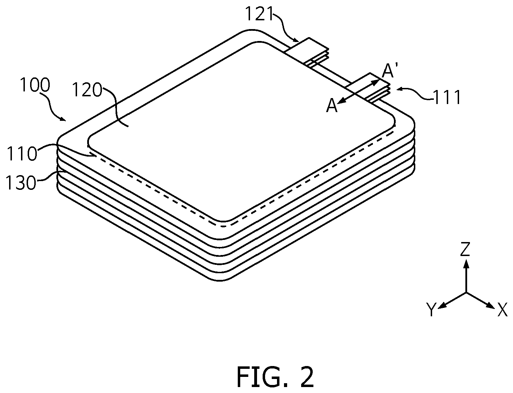

FIG. 1 illustrates an exploded perspective view of a secondary battery according to some embodiments of the present disclosure. FIG. 2 illustrates a perspective view of an electrode assembly according to some embodiments of the present disclosure.

Referring to FIGS. 1 and 2, a secondary battery 10 according to the present disclosure may include an electrode assembly 100, a case 140 having one open surface and accommodating the electrode assembly 100, and a cover 150 that covers the open surface of the case 140 to seal the electrode assembly 100 from the outside. The electrode assembly 100 may include a first electrode 110, a second electrode 120, and a separator 130 disposed between the first electrode 110 and the second electrode 120.

In some embodiments, the electrode assembly 100 may be formed by winding or stacking the first electrode 110, the separator 130, and the second electrode 120, which are formed in a thin plate or film shape. In examples in which the electrode assembly 100 is wound, the winding axis may be parallel to the vertical axis direction of the case 140. The direction parallel to the vertical axis direction of the case 140 may be the first direction Y in FIG. 1. In addition, the electrode assembly 100 may be a stack type rather than a wound type. In examples in which the electrode assembly 100 is formed as a stack type, the first electrode 110 and the second electrode 120 may be sequentially stacked, and the separator 130 may be disposed between the first electrode 110 and the second electrode 120. In the present disclosure, the shape of the electrode assembly 100 is not particularly limited. In addition, the electrode assembly 100 may be a Z-stack electrode assembly 100 in which the first electrode 110 and the second electrode 120 are inserted on opposite sides of the separator 130 bent in a Z-stack. The electrode assembly 100 may be accommodated inside the case 140 by stacking one or more electrode assemblies 100 so that long sides thereof are adjacent to each other. In the present disclosure, the number of electrode assemblies 100 is not particularly limited. In the electrode assembly 100, the first electrode 110 may serve as a positive electrode and the second electrode 120 may serve as a negative electrode. Of course, the opposite is also possible.

The first electrode 110 may be formed by applying an active material, such as a transition metal oxide, to a current collector plate formed of a metal foil such as aluminum or an aluminum alloy. The first electrode 110 may include a first uncoated portion, which is a region where the active material is not applied. The first uncoated portion may be connected to the first substrate tab that is separately formed, or a portion of the first uncoated portion may be punched out to form the first substrate tab.

The second electrode 120 may be formed by applying an active material, such as graphite or carbon, to a current collector plate formed of a metal foil such as copper, a copper alloy, nickel, or a nickel alloy. The second electrode 120 may include a second uncoated portion, which is a region where an active material is not applied. The second uncoated portion may be connected to the second substrate tab that is separately formed, or a portion of the second uncoated portion may be punched out to form the second substrate tab.

The separator 130 may be disposed between the first electrode 110 and the second electrode 120 to prevent an electrical short circuit. For example, the separator 130 may be formed of polyethylene, polypropylene, polyvinylidene fluoride, or a multilayer of two or more layers thereof. However, the composition of the separator 130 according to the present disclosure is not limited thereto.

The structure of the electrode assembly 100 described above is only an example, and the present disclosure is not limited thereto.

Referring to FIG. 2, the first electrode 110 may include a plurality of first substrate tabs 111 that are disposed to extend in the first direction Y on one surface of the first electrode 110. The first substrate tabs 111 may serve as a current flow path between the first electrode 110 and the first terminal 116. Similarly, the second electrode 120 may include a plurality of second substrate tabs 121 that are disposed to extend in the first direction Y on one surface of the second electrode 120. The second substrate tabs 121 may serve as a current flow path between the second electrode 120 and the second terminal 126. For example, the first terminal 116 may be in the form of a pin made of aluminum (Al), and the second terminal 126 may be in the form of a plate made of nickel (Ni). However, the material and shape of the first terminal 116 and the second terminal 126 are not limited thereto.

In some embodiments, the case 140 may include an electrolyte injection port 142 that is a passage through which an electrolyte is injected after accommodating the electrode assembly 100 and is sealed by the cover 150. The electrolyte injection port 142 may be disposed on one surface perpendicular to the open surface of the case 140.

The case 140 may include a conductive metal, such as aluminum, an aluminum alloy, stainless steel (SUS), or nickel-plated steel. In some embodiments, the case 140 may include stainless steel (SUS). Because the case 140 includes stainless steel (SUS), the mechanical strength of the secondary battery 10 may be improved (e.g., increased).

In some embodiments, the electrode assembly 100 may include a first multi-tab 112 formed by welding at least some of the first substrate tabs 111 and a second multi-tab 122 formed by welding at least some of the second substrate tabs 121.

In some embodiments, the secondary battery 10 according to the present disclosure may include a first strip terminal 114 joined to at least some of the first substrate tabs 111 in the second direction X and a second strip terminal 124 joined to at least some of the second substrate tabs 121 in the second direction X.

The first electrode 110 and the second electrode 120 may have a symmetrical structure. Hereinafter, the description focuses on the first electrode 110, the description of the specific configuration of the second electrode 120 is omitted, and the difference from the first electrode 110 is mainly described. Accordingly, the part not described regarding the second electrode 120 may be identical or similar to the description of the first electrode 110.

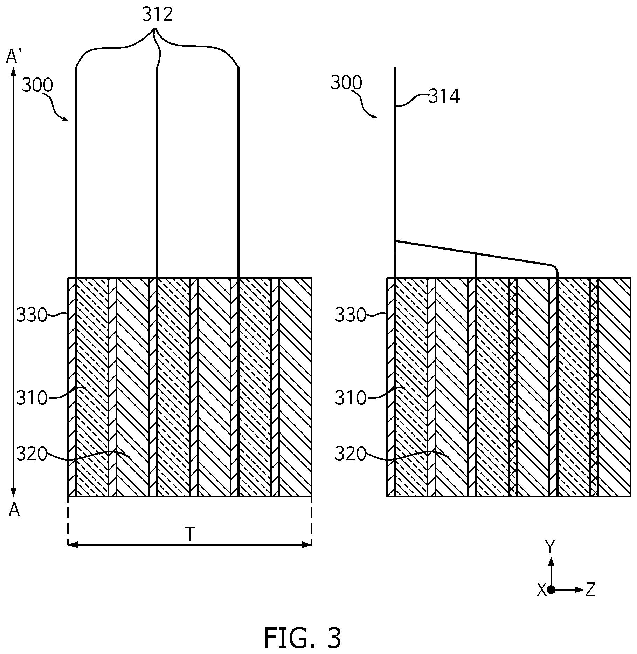

FIGS. 3A-3B illustrate cross-sectional views taken along the line A-A' of FIG. 2, according to some embodiments of the present disclosure. An electrode assembly 300 illustrated in FIGS. 3A-3B may correspond to the electrode assembly 100 of FIGS. 1 and 2. In the present disclosure, the electrode assembly 300 may include a plurality of first electrodes 310, a plurality of second electrodes 320, and a separator 330 disposed between the first electrodes 310 and the second electrodes 320 that are adjacent to each other.

Referring to FIG. 3A, in some embodiments, the first electrode 310 may include a plurality of first substrate tabs 312 that are disposed to extend in the first direction Y on one surface of the first electrode 310. The first substrate tabs 312 may be formed to protrude upward from the electrode assembly 300.

Referring to FIG. 3B, in some embodiments, at least some of the first substrate tabs 312 may be combined to form a first multi-tab 314. In such examples, at least some of the first substrate tabs 312 may be welded to form the first multi-tab 314. When forming the first multi-tab 314, at least some of the first substrate tabs 312 may be joined by ultrasonic welding, laser welding, and/or the like. The first multi-tab 314 may refer to a plurality of first substrate tabs 312 that are welded together to form one electrode tab. By welding the first substrate tabs 312 to form the first multi-tab 314, the adhesion between the first substrate tabs 312 may be improved (e.g., increased).

Referring to FIGS. 3B, the first substrate tabs 312 may overlap in the third direction Z to form the first multi-tab 314. The first multi-tab 314 may refer to a plurality of first substrate tabs 312 that are welded together to form one electrode tab. The third direction Z may be the thickness direction of the electrode assembly 300. The third direction Z may be perpendicular to the first direction Y and perpendicular to the second direction X.

A process of cutting the first multi-tab 314 may be required to insert the electrode assembly 300 into the case. Because the first multi-tab 314 is formed by welding the first substrate tabs 312 in advance, the first substrate tabs 312 may be effectively fixed and the uniformity of the cut surface may be improved (e.g., increased).

In some embodiments, the maximum thickness of the electrode assembly 300 may be 3 mm or less.

Because the first multi-tab 314 is formed by welding the first substrate tabs 312 in advance, it may be possible to cut the first substrate tabs 312 without using a separate guide that gathers and fixes the first substrate tabs 312 to one side. Due to this, the length of the first multi-tab 314 (e.g., the length of the first multi-tab in the Y direction) may be cut shorter as compared to the case of cutting the first multi-tab 314 using a separate guide. By cutting the length of the first multi-tab 314 shorter, the number of times the first multi-tab 314 is bent when the electrode assembly 300 is inserted into the case may be reduced. Due to this, the height after bending the first multi-tab 314 may be effectively reduced, and accordingly, the maximum thickness T of the electrode assembly 300 may also be reduced.

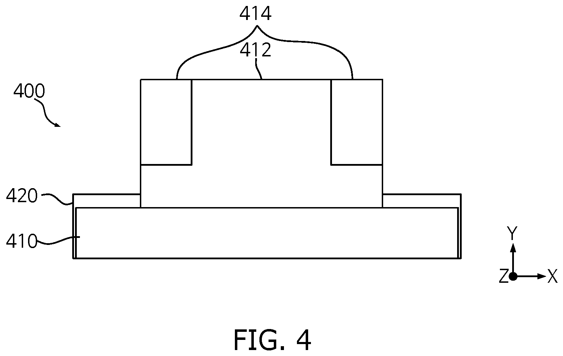

FIG. 4 illustrates an electrode assembly in which a first tab welding region is formed, according to some embodiments of the present disclosure. An electrode assembly 400 illustrated in FIG. 4 may correspond to the electrode assembly 100 of FIGS. 1 and 2.

Referring to FIG. 4, the electrode assembly 400 according to the present disclosure may include a first multi-tab 412 extending in the first direction Y on one surface of a first electrode 410.

In some embodiments, the first multi-tab 412 may include first tab welding regions 414 in which at least some of the first substrate tabs are welded. The first tab welding regions 414 may be disposed at opposite ends of the first multi-tab 412 with respect to the second direction X. For example, the first tab welding regions 414 may be disposed at opposite ends of the first multi-tab 412 excluding the central portion with respect to the second direction X. Additionally or alternatively, the first tab welding region 414 may be disposed at the end of the first multi-tab 412, including the central portion of the first multi-tab 412. As used herein, the phrase "with respect to a direction" may be interchangeable with "along a direction".

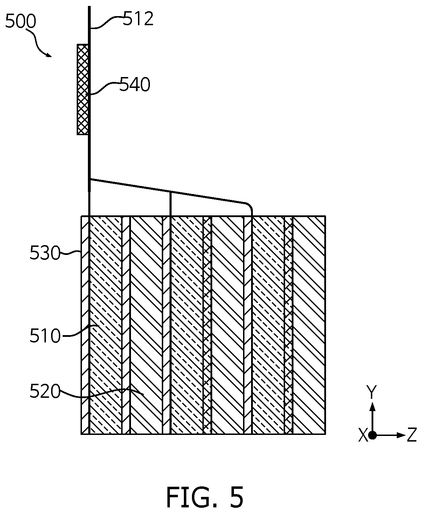

FIG. 5 illustrates an electrode assembly with which a strip terminal is joined, according to some embodiments of the present disclosure. An electrode assembly 500 illustrated in FIG. 5 may correspond to the electrode assembly 300 of FIG. 3.

Referring to FIG. 5, the electrode assembly 500 may include a first electrode 510, a second electrode 520, and a separator 530 disposed between the first electrode 510 and the second electrode 520. The first electrode 510 may include a plurality of first substrate tabs that are disposed to extend in the first direction Y on one surface of the first electrode 510. In addition, at least some of the first substrate tabs may be welded to form a first multi-tab 512. The first multi-tab 512 may refer to a plurality of first substrate tabs that are welded together to form one electrode tab.

In some embodiments, a first strip terminal 540 may be joined to one side of the first multi-tab 512. One surface of the first multi-tab 512 to which the first strip terminal 540 is joined may be the outer surface of the electrode assembly 500 with respect to the third direction Z.

In some embodiments, the first strip terminal 540 may be welded to the first multi-tab 512. The first strip terminal 540 may be joined by ultrasonic welding, laser welding, and/or the like. Accordingly, the first multi-tab 512 may include a first terminal welding region that is welded to the first strip terminal 540. The first terminal welding region may not overlap the first tab welding region.

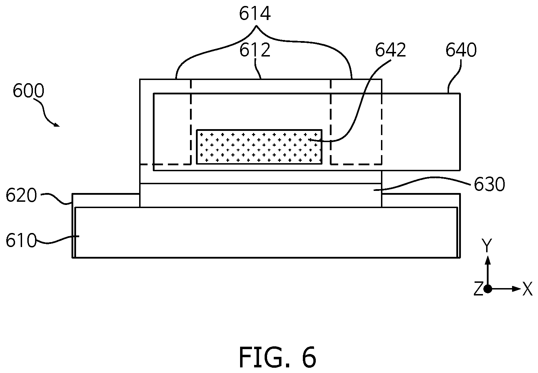

FIG. 6 illustrates an electrode assembly in which a first terminal welding region is formed, according to some embodiments of the present disclosure. An electrode assembly 600 illustrated in FIG. 6 may correspond to the electrode assembly 100 of FIG. 2.

Referring to FIG. 6, the electrode assembly 600 may include a first electrode 610, a separator, and a second electrode 620. The first electrode 610 may include a plurality of first substrate tabs that are disposed to extend in the first direction Y on one surface of the first electrode 610. At least some of the first substrate tabs may be welded to form a first multi-tab 612. The first multi-tab 612 may refer to a plurality of first substrate tabs that are welded together to form one electrode tab. A first tab welding region 614 may be formed in the first multi-tab 612 in which at least some of the first substrate tabs are welded. The first tab welding regions 614 may be disposed at opposite ends of the first multi-tab 612 with respect to the second direction X. For example, the first tab welding regions 614 may be disposed at opposite ends of the first multi-tab 612 excluding the central portion with respect to the second direction X. Additionally or alternatively, in FIG. 6, the first tab welding region 614 may be disposed at the end of the first multi-tab 612, including the central portion of the first multi-tab 612.

In some embodiments, a first strip terminal 640 disposed in the second direction X may be joined to at least a portion of the first multi-tab 612. That is, the first strip terminal 640 may be joined to the first multi-tab 612 while the long side is disposed parallel to the second direction X. Because the first strip terminal 640 is joined to the first multi-tab 612 while being disposed parallel to the second direction X, the first strip terminal 640 may not protrude upward from the first multi-tab 612. Accordingly, the portion protruding upward from the stack in which the first electrode 610, the second electrode 620, and the separator are stacked with respect to the first direction Y may be reduced (e.g., minimized).

In some embodiments, one end of the first strip terminal 640 may be joined to at least a portion of the first multi-tab 612. Referring to FIG. 6, it may be observed that the left end of the first strip terminal 640 is joined to the first multi-tab 612. Accordingly, the right end of the first strip terminal 640 may be disposed to protrude to the right of the first multi-tab 612 without being joined to the first multi-tab 612. Herein, the terms "left" and "right" are defined with respect to the second direction X. In some examples, in FIG. 6, the left end of the first strip terminal 640 may be disposed to protrude to the left of the first multi-tab 612, and the right end of the first strip terminal 640 may be disposed to protrude to the right of the first multi-tab 612. The central portion excluding the left and right ends of the first strip terminal 640 may be joined to the first multi-tab 612.

In some embodiments, the first strip terminal 640 may be welded to at least a portion of the first multi-tab 612. The first strip terminal 640 may be joined to at least a portion of the first multi-tab 612 by ultrasonic welding, laser welding, and/or the like.

In some embodiments, the first multi-tab 612 may include a first terminal welding region 642 that is welded to the first strip terminal 640. The first terminal welding region 642 may be disposed in a region of the first multi-tab 612 other than (e.g., outside of) the first tab welding region 614. Referring to FIG. 6, it may be observed that the first tab welding region 614 is disposed at each end excluding the central portion of the first multi-tab 612 with respect to the second direction X, and the first terminal welding region 642 is disposed at the central portion of the first multi-tab 612 in which the first tab welding region 614 is not disposed. Because the first tab welding region 614 and the first terminal welding region 642 are disposed not to overlap each other, damage due to repeated welding processes does not accumulate, thereby preventing or substantially reducing the incidence of cracks. In addition, because the region of the first multi-tab 612 in which the first tab welding region 614 is not disposed may form a uniform surface, the welding quality may be improved in examples in which the first strip terminal 640 is welded.

In some embodiments, a first coating layer 630 may be formed in a portion of the first multi-tab 612 that protrudes from the first electrode 610. The first coating layer 630 may include at least one of polyimide or ceramic. For example, the second electrode 620 may be manufactured to be larger than the first electrode 610. The first coating layer 630 may serve to insulate between the first multi-tab 612 and the second electrode 620. Accordingly, a short circuit phenomenon may be prevented from occurring between the first electrode 610 and the second electrode 620 or between the first multi-tab 612 and the second electrode 620.

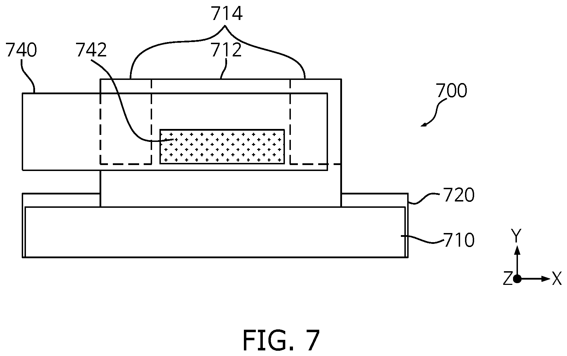

FIG. 7 illustrates an electrode assembly in which a second terminal welding region is formed, according to some embodiments of the present disclosure. An electrode assembly 700 illustrated in FIG. 7 may correspond to the electrode assembly 100 of FIG. 2.

Referring to FIG. 7, the electrode assembly 700 may include a first electrode 710, a separator, and a second electrode 720. The second electrode 720 may include a plurality of second substrate tabs that are disposed to extend in the first direction Y on one surface of the second electrode 720. At least some of the second substrate tabs may be welded to form a second multi-tab 712. The second multi-tab712 may refer to a plurality of second substrate tabs that are welded together to form one electrode tab. A second tab welding region714 may be formed in the second multi-tab 712 in which at least some of the second substrate tabs are welded. The second tab welding regions 714 may be disposed at opposite ends of the second multi-tab 712 with respect to the second direction X. For example, the second tab welding regions 714 may be disposed at opposite ends of the second multi-tab 712 excluding the central portion with respect to the second direction X. Additionally or alternatively, in FIG. 7, the second tab welding region 714 may be disposed at the end of the second multi-tab 712, including the central portion of the second multi-tab 712.

In some embodiments, a second strip terminal 740 disposed in the second direction X may be joined to at least a portion of the second multi-tab 712. That is, the second strip terminal 740 may be joined to the second multi-tab 712 while the long side is disposed parallel to the second direction X. Because the second strip terminal 740 is joined to the second multi-tab 712 while being disposed parallel to the second direction X, the second strip terminal 740 may not protrude upward from the second multi-tab 712. Accordingly, the portion protruding upward from the stack in which the first electrode 710, the second electrode 720, and the separator are stacked with respect to the first direction Y may be reduced (e.g., minimized).

In some embodiments, one end of the second strip terminal 740 may be joined to at least a portion of the second multi-tab 712. Referring to FIG. 7, it may be observed that the right end of the second strip terminal 740 is joined to the second multi-tab 712. Accordingly, the right end of the second strip terminal 740 may be disposed to protrude to the left of the second multi-tab 712 without being joined to the second multi-tab 712. In some examples, in FIG. 7, the left end of the second strip terminal 740 may be disposed to protrude to the left of the second multi-tab 712, and the right end of the second strip terminal 740 may be disposed to protrude to the right of the second multi-tab 712. The central portion excluding the left and right ends of the second strip terminal 740 may be joined to the second multi-tab 712.

In some embodiments, the second strip terminal 740 may be welded to at least a portion of the second multi-tab 712. The second strip terminal 740 may be joined to at least a portion of the second multi-tab 712 by ultrasonic welding, laser welding, and/or the like.

In some embodiments, the second multi-tab 712 may include a second terminal welding region 742 that is welded to the second strip terminal 740. The second terminal welding region 742 may be disposed in a region of the second multi-tab 712 other than (e.g., outside of) the second tab welding region 714. Referring to FIG. 7, it may be observed that the second tab welding region 714 is disposed at each end excluding the central portion of the second multi-tab 712 with respect to the second direction X, and the second terminal welding region 742 is disposed at the central portion of the second multi-tab 712 in which the second tab welding region 714 is not disposed. Because the second tab welding region 714 and the second terminal welding region 742 are disposed not to overlap each other, damage due to repeated welding processes does not accumulate, thereby preventing or substantially reducing the incidence of cracks. In addition, because the region of the second multi-tab 712 in which the second tab welding region 714 is not disposed may form a uniform surface, the welding quality may be improved (e.g., increased) in examples in which the second strip terminal 740 is welded.

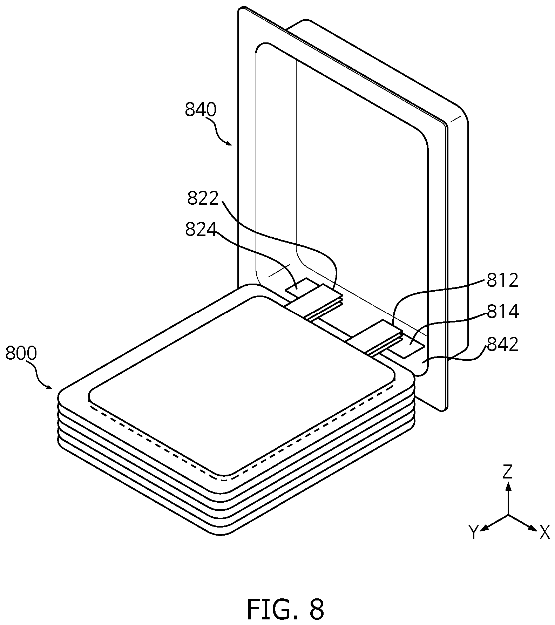

FIG. 8 illustrates the welding of a strip terminal to a case according to some embodiments of the present disclosure.

In some embodiments, an electrode assembly 800 may include a first electrode, a separator, and a second electrode. The first electrode may include a plurality of first substrate tabs that are disposed to extend in the first direction Y on one surface of the first electrode. At least some of the first substrate tabs may be welded to form a first multi-tab 812. The first multi-tab 812 may refer to a plurality of first substrate tabs that are welded together to form one electrode tab. Similarly, the second electrode may include a plurality of second substrate tabs that are disposed to extend in the first direction Y on one surface of the second electrode. At least some of the second substrate tabs may be welded to form a second multi-tab 822. The second multi-tab 822 may refer to a plurality of second substrate tabs that are welded together to form one electrode tab.

In some embodiments, a first strip terminal 814 disposed in the second direction X may be joined to at least a portion of the first multi-tab 812. That is, the first strip terminal 814 may be joined to the first multi-tab 812 while the long side is disposed parallel to the second direction X. Because the first strip terminal 814 is joined to the first multi-tab 812 while being disposed parallel to the second direction X, the first strip terminal 814 may not protrude upward from the first multi-tab 812. Similarly, a second strip terminal 824 disposed in the second direction X may be joined to at least a portion of the second multi-tab 822. That is, the second strip terminal 824 may be joined to the second multi-tab 822 while the long side is disposed parallel to the second direction X. Because the second strip terminal 824 is joined to the second multi-tab 822 while being disposed parallel to the second direction X, the second strip terminal 824 may not protrude upward from the second multi-tab 822. Accordingly, the portion protruding upward from the stack in which the first electrode, the second electrode, and the separator are stacked with respect to the first direction Y may be reduced (e.g., minimized).

In some embodiments, the first strip terminal 814 and the second strip terminal 824 may be welded to an inner surface 842 of a case 840. As illustrated in FIG. 8, the surface of the first strip terminal 814 opposite to the surface that is in contact with the first multi-tab 812 may be in contact with the case 840. Similarly, the surface of the second strip terminal 824 opposite to the surface that is in contact with the second multi-tab 822 may be in contact with the case 840. Through this configuration, the flat surfaces of the strip terminal 814 and 824 may be in contact with the case 840, and the welding quality may be improved in examples in which the case 840 and the strip terminals 814 and 824 are welded together.

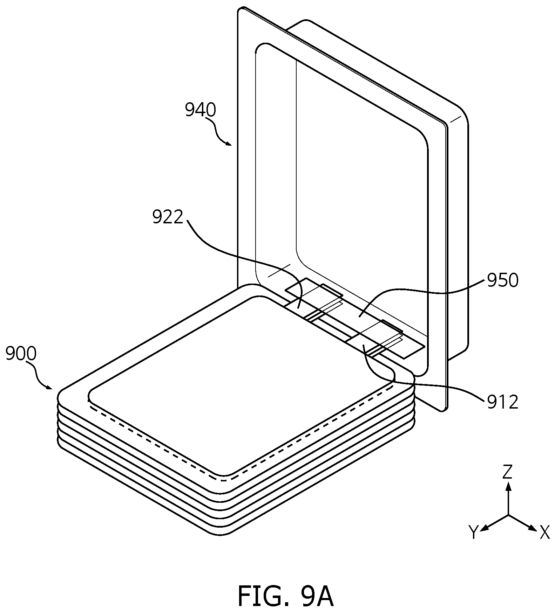

FIG. 9A illustrates an insulating plate according to some embodiments of the present disclosure.

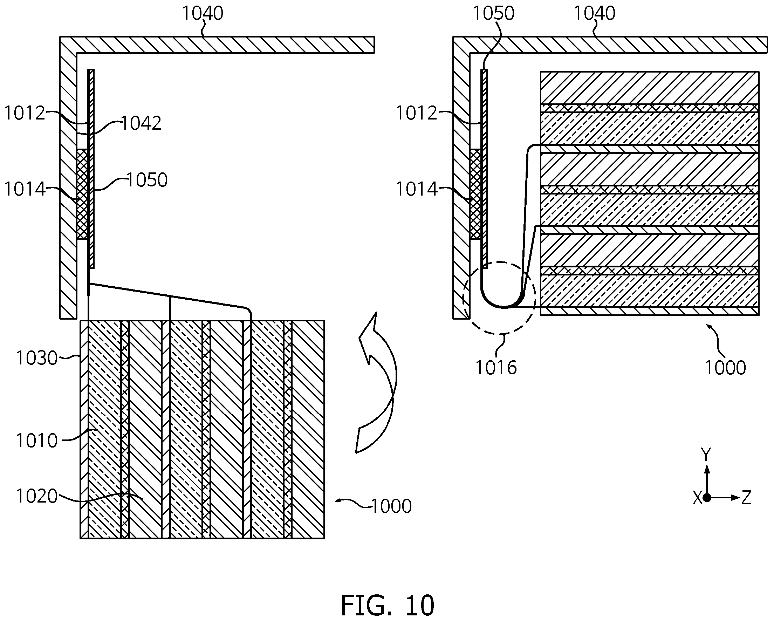

In some embodiments, an insulating plate 950 may be disposed on a first multi-tab 912 and a second multi-tab 922. The insulating plate 950 may be in the shape of a thin film or plate. The insulating plate 950 may be formed of an insulating material including polyimide, polypropylene, and/or the like. The insulating plate 950 may be disposed on a second surface opposite to a first surface of the first multi-tab 912 to which a first strip terminal is welded. As illustrated in FIG. 9A, the first surface may be the lower surface of the first multi-tab 912 with respect to the third direction Z, and the second surface may be the upper surface of the first multi-tab 912 with respect to the third direction Z. Accordingly, the first strip terminal may be disposed on the lower surface of the first multi-tab 912, and the insulating plate 950 may be disposed on the upper surface of the first multi-tab 912. As described below with reference to FIGS. 10A-10B, the insulating plate 950 may serve to insulate the parts where the first multi-tab 912 and the second multi-tab 914 come into contact when bent.

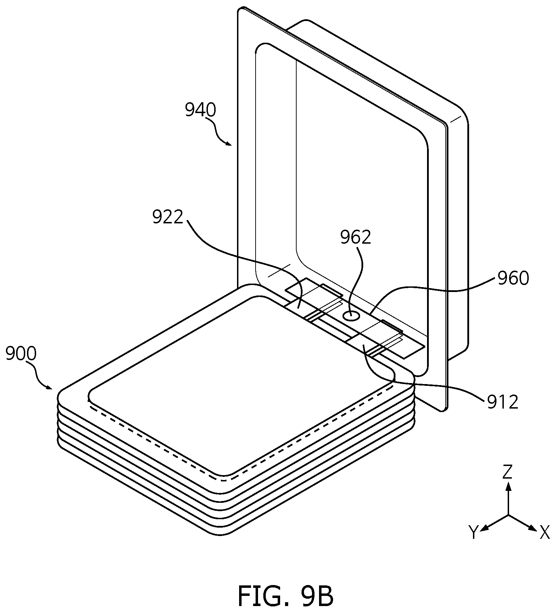

FIG. 9B illustrates an insulating tape according to some embodiments of the present disclosure.

In some embodiments, an insulating tape 960 may be disposed on a first multi-tab 912 and a second multi-tab 922. The insulating tape 960 may be in the shape of a thin film. The insulating tape 960 may be formed of an insulating material including polyimide, polypropylene, or the like. The insulating tape 960 may be disposed on a second surface opposite to a first surface of the first multi-tab 912 to which a first strip terminal is welded. As illustrated in FIG. 9B, the first surface may be the lower surface of the first multi-tab 912 with respect to the third direction Z, and the second surface may be the upper surface of the first multi-tab 912 with respect to the third direction Z. Accordingly, the first strip terminal may be disposed on the lower surface of the first multi-tab 912, and the insulating tape 960 may be disposed on the upper surface of the first multi-tab 912. The insulating tape 960 may serve to insulate the parts where the first multi-tab 912 and the second multi-tab 914 come into contact when bent.

In addition, a hole 962 may be formed in the central portion of the insulating tape 960. The hole 962 may be formed at a position corresponding to an electrolyte injection port (e.g., may correspond to the electrolyte injection port 142 of FIG. 1) positioned on one surface of the case 940 with respect to the third direction Z. Accordingly, even in examples in which the insulating tape 960 is attached to one surface of the case 940, the electrolyte injection port may not be sealed and the electrolyte may be injected through the hole 962.

FIGS. 10A-10B illustrate the insertion of an electrode assembly into a case according to some embodiments of the present disclosure.

Referring to FIGS. 10A-10B, it may be observed that an electrode assembly 1000 including a first electrode 1010, a second electrode 1020, and a separator 1030, a plurality of first substrate tabs disposed to extend in the first direction Y on one surface of the first electrode 1010, a first multi-tab 1012 formed by welding at least some of the first substrate tabs, a first strip terminal 1014 disposed on one surface of the first multi-tab 1012, and an insulating plate 1050 disposed on the other surface opposite to one surface of the first multi-tab 1012, are illustrated. In addition, the surface of the first strip terminal 1014 opposite to the surface that is in contact with the first multi-tab 1012 may be in contact with an inner surface 1042 of a case 1040.

In some embodiments, the first multi-tab 1012 may include a first bent portion 1016, which is a portion where the first multi-tab 1012 is bent. The first bent portion 1016 may be disposed between a portion where the first multi-tab 1012 is in contact with the first strip terminal 1014 and a portion where the first substrate tabs begin to protrude from the first electrode 1010. Because the first bent portion 1016 is bent, the electrode assembly 1000 may be inserted into the case 1040.

In some embodiments, the first strip terminal 1014 may be joined to at least a portion of the first multi-tab 1012 while being disposed in the second direction X. That is, the first strip terminal 1014 may be joined to the first multi-tab 1012 while the long side is disposed parallel to the second direction X. Because the first strip terminal 1014 is joined to the first multi-tab 1012 while being disposed in the second direction X, the first strip terminal 1014 may not protrude upward from the first multi-tab 1012. That is, even in examples in which the first strip terminal 1014 is joined to the first multi-tab

1012, the first strip terminal 1014 may not protrude in the first direction Y. Due to this, no additional bent section other than the first bent portion 1016 may be required during the process of inserting the electrode assembly 1000 into the case 1040, as shown in FIG. 10B. Accordingly, after the electrode assembly 1000 is inserted into the case 1040, the space occupied by the first multi-tab 1012 and the first strip terminal 1014 in the third direction (Z, for example, the longitudinal direction of the electrode assembly 1000) may be reduced (e.g., minimized). Due to this, the energy density of the secondary battery may be improved (e.g., increased). In addition, because the electrode assembly 1000 may be inserted into the case 1040 without an additional bending process other than the process of bending the first bent portion 1016, the time and cost required for the bending process may be saved.

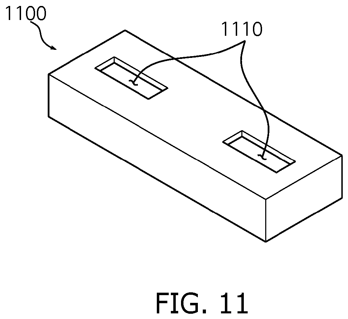

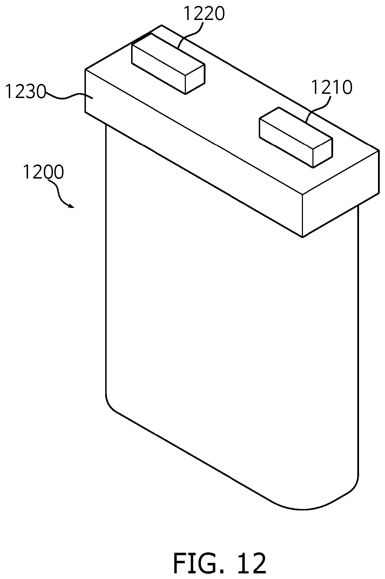

FIG. 11 illustrates an insulating cover according to some embodiments of the present disclosure. FIG. 12 illustrates electrode assembly joined to an insulating cover according to some embodiments of the present disclosure.

As illustrated, an insulating cover 1100 may have a rectangular shape including two holes 1110. However, the shape of the insulating cover 1100 is not limited thereto.

In some embodiments, the insulating cover 1100 may be formed of an insulating material including polyimide, polypropylene, and/or the like. The insulating cover 1100 may be joined to an electrode assembly 1200 by inserting a first multi-tab 1210 and a second multi-tab 1220 through the two holes 1110 included in the insulating cover 1100. Therefore, the two holes 1110 may be larger than the first multi-tab 1210 and the second multi-tab 1220. However, the difference in size may not be large in order for the insulating cover 1100 to perform insulation. The insulating cover 1100 may serve to insulate between the first multi-tab 1210 and the second multi-tab 1220, between the first and second multi-tabs 1210 and 1220 and the first electrode, or between the first and second multi-tabs 1210 and 1220 and the second electrode. In addition, the insulating cover 1100 may serve to replace the insulating plate 1050 illustrated in FIGS. 10A-10B.

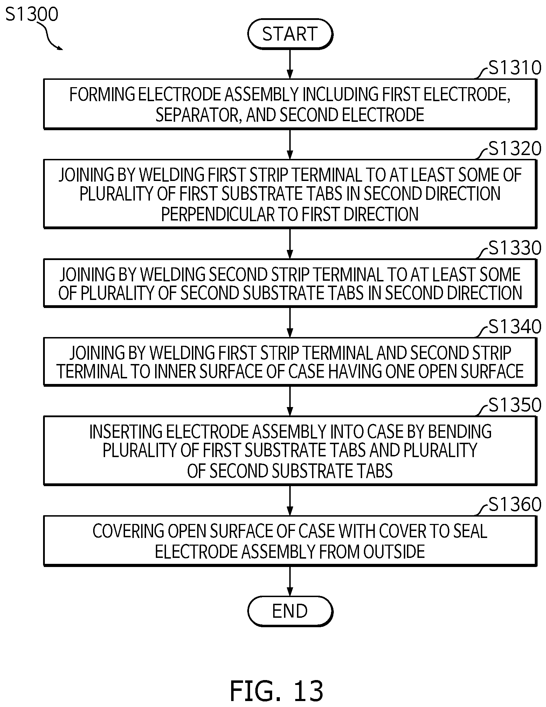

FIG. 13 is a flowchart illustrating a method for manufacturing a secondary battery 10 according to some embodiments of the present disclosure.

Referring to FIG. 13, a method S1300 for manufacturing a secondary battery 10 according to some embodiments of the present disclosure may be initiated by forming an electrode assembly 100 including a first electrode 110, a separator 130, and a second electrode 120 (S1310). The first electrode 110 may include a plurality of first substrate tabs 111 disposed to extend in the first direction on one surface of the first electrode 110, and the second electrode 120 may include a plurality of second substrate tabs 121 disposed to extend in the first direction on one surface of the second electrode 120.

In some embodiments, the method S1300 for manufacturing a secondary battery 10 may include forming a first multi-tab 112 by welding at least some of a plurality of first substrate tabs 111, and forming a second multi-tab 122 by welding at least some of a plurality of second substrate tabs 121. The first multi-tab 112 may refer to a plurality of first substrate tabs 111 welded together to form one electrode tab, and the second multi-tab 122 may refer to a plurality of second substrate tabs 121 welded together to form one electrode tab. At least some of the first substrate tabs 111 may be joined by ultrasonic welding, laser welding, and/or the like to form a first multi-tab 112, and at least some of the second substrate tabs 121 may be joined by ultrasonic welding, laser welding, and/or the like to form a second multi-tab 122. Because the first substrate tabs 111 and the second substrate tabs 121 are each welded together to form one electrode tab, the uniformity of the cutting surface on which the first multi-tab 112 or the second multi-tab 122 is cut may be improved (e.g., increased). Due to this, the performance or durability of the first multi-tab 112 or the second multi-tab 122 may be improved, and thus the performance or durability of the secondary battery 10 may also be improved.

In some embodiments, the method S1300 for manufacturing a secondary battery 10 may include cutting at least a portion of one end of the first multi-tab 112 or the second multi-tab 122.

In some embodiments, the method S1300 for manufacturing a secondary battery 10 may include joining an electrode assembly 100 and an insulating cover by respectively inserting the first multi-tab 112 and the second multi-tab 122 into two holes included in the insulating cover.

Next, a first strip terminal 114 may be welded and joined to at least some of the first substrate tabs 111 in the second direction perpendicular to the first direction (S1320), and a second strip terminal 124 may be welded and joined to at least some of the second substrate tabs 121 in the second direction (S1330). One end of the first strip terminal 114 may be joined to at least some of the first substrate tabs 111, and one end of the second strip terminal 124 may be joined to at least some of the second substrate tabs 121. The first strip terminal 114 and the second strip terminal 124 may be joined by ultrasonic welding, laser welding, and/or the like.

Next, the first strip terminal 114 and the second strip terminal 124 may be welded and joined to the inner surface of the case having one open surface (S1340). In some examples, the surface of the first strip terminal 114 opposite to the surface that is in contact with the first multi-tab 112 may be in contact with the case. Similarly, the surface of the second strip terminal 124 opposite to the surface that is in contact with the second multi-tab 122 may be in contact with the case.

Next, the electrode assembly 100 may be inserted into the case by bending the first substrate tabs 111 and the second substrate tabs 121 (S1350). In some examples, the first substrate tabs 111 may include a first bent portion which is to be bent. The first bent portion may be disposed between a portion where the first substrate tabs 111 are in contact with the first strip terminal 114 and a portion where the first substrate tabs 111 begin to protrude from the first electrode 110. By bending the first bent portion, the electrode assembly 100 may be inserted into the case. Similarly, the second substrate tabs 121 may include a second bent portion which is to be bent. The second bent portion may be disposed between a portion where the second substrate tabs 121 are in contact with the second strip terminal 124 and a portion where the second substrate tabs 121 begin to protrude from the second electrode 120. By bending the second bent portion, the electrode assembly 100 may be inserted into the case.

Next, an open surface of the case is covered with a cover to seal the electrode assembly 100 from the outside (S1360).

The flowchart illustrated in FIG. 13 and the above description are only examples and may be implemented differently in some embodiments. For example, one or more steps may be omitted, the order of the respective steps may be changed, one or more steps may be performed while overlapping each other, or one or more steps may be repeated a plurality of times.

The preferred embodiments of the present disclosure have been disclosed for illustrative purposes, and it will be understood by those of ordinary skill in the art that various modifications, changes, and additions are possible within the scope of the present disclosure, and such modifications, changes, and additions should be considered to fall within the scope of the appended claims.

It will be understood by those of ordinary skill in the art that various substitutions, modifications, and changes can be made without departing from the technical scope of the present disclosure, and therefore, the present disclosure is not limited to the above-described embodiments and the attached drawings.

Although the present disclosure has been described above with respect to some embodiments thereof, the present disclosure is not limited thereto. Various suitable modifications and variations can be made thereto by those skilled in the art within the scope of the present disclosure as defined by the appended claims and their equivalents.

### Description of some of the Reference Symbols

10: secondary battery
100: electrode assembly
110: first electrode
112: first multi-tab
114: first strip terminal
116: first terminal
120: second electrode
122: second multi-tab
124: second strip terminal
126: second terminal
130: separator
140: case
142: electrolyte injection port
150: cover

## Claims

1. A secondary battery comprising:
an electrode assembly (100) configured to comprise a first electrode (110), a separator (130), and a second electrode (120), the first electrode (110) comprising a plurality of first substrate tabs (111) extending in a first direction on one surface of the first electrode (110), and the second electrode (120) comprising a plurality of second substrate tabs (121) extending in the first direction on one surface of the second electrode (120);
a case (140) configured to have one open surface and to accommodate the electrode assembly (100);
a cover (150) configured to cover the open surface of the case (140) to seal the electrode assembly (100) from an outside;
a first strip terminal (114) joined to at least some of the first substrate tabs (111) in a second direction perpendicular to the first direction; and
a second strip terminal (124) joined to at least some of the second substrate tabs (121) in the second direction.

2. The secondary battery as claimed in claim 1, wherein the case (140) comprises stainless steel (SUS).

3. The secondary battery as claimed in claim 1 or claim 2, wherein the electrode assembly (100) comprises a first multi-tab (112) formed by welding at least some of the first substrate tabs (111) and a second multi-tab (122) formed by welding at least some of the second substrate tabs (121).

4. The secondary battery as claimed in claim 3, wherein the first multi-tab (112) comprises first tab welding regions in which at least some of the first substrate tabs (111) are welded,
wherein the second multi-tab (122) comprises second tab welding regions in which at least some of the second substrate tabs (121) are welded,
wherein the first tab welding regions are at opposite ends of the first multi-tab with respect to the second direction, and
wherein the second tab welding regions are at opposite ends of the second multi-tab with respect to the second direction.

5. The secondary battery as claimed in claim 4, wherein the first multi-tab (112) comprises a first terminal welding region welded to the first strip terminal (114),
wherein the second multi-tab (122) comprises a second terminal welding region welded to the second strip terminal (124), and
wherein the first terminal welding region is in a region of the first multi-tab (112) outside of the first tab welding regions, and the second terminal welding region is in a region of the second multi-tab (122) outside of the second tab welding regions.

6. The secondary battery as claimed in claim 5, further comprising an insulating plate (1050) or an insulating tape (960) on a second surface opposite to a first surface of the first multi-tab (112) to which the first strip terminal (114) is welded.

7. The secondary battery as claimed in any one of claims 3 to 6, wherein at least some of the first substrate tabs (111) are joined by ultrasonic welding or laser welding to form the first multi-tab (112), and
wherein at least some of the second substrate tabs (121) are joined by ultrasonic welding or laser welding to form the second multi-tab (122).

8. The secondary battery as claimed in any one of claims 3 to 7, wherein a maximum thickness of the electrode assembly (100) is 3 mm or less.

9. The secondary battery as claimed in any one of claims 3 to 8, further comprising an insulating cover (1100) configured to comprise two holes,
wherein the insulating cover (1100) is joined to the electrode assembly (100) by inserting each of the first multi-tab (112) and the second multi-tab (122) into the two holes.

10. The secondary battery as claimed in any one of claims 3 to 9, wherein the first multi-tab (112) comprises a first bent portion in which the first multi-tab (112) is bent, and
wherein the second multi-tab (122) comprises a second bent portion in which the second multi-tab (122) is bent.

11. The secondary battery as claimed in claim 10, wherein the electrode assembly (100) is inserted into the case (140) by bending the first bent portion and the second bent portion.

12. The secondary battery as claimed in any one of the preceding claims, wherein the first strip terminal (114) and the second strip terminal (124) are welded to an inner surface of the case (140).

13. The secondary battery as claimed in any one of the preceding claims, wherein one end of the first strip terminal (114) is joined to at least some of the first substrate tabs (111), and
wherein one end of the second strip terminal (124) is joined to at least some of the second substrate tabs (121).

14. The secondary battery as claimed in any one of the preceding claims, wherein the case (140) comprises an electrolyte injection port (142) on one surface perpendicular to the open surface.

15. The secondary battery as claimed in any one of the preceding claims, wherein the first strip terminal (114) is joined to at least some of the first substrate tabs (111) by ultrasonic welding or laser welding, and
wherein the second strip terminal (124) is joined to at least some of the second substrate tabs (121) by ultrasonic welding or laser welding.
